# EUROPEAN PATENT APPLICATION

(11) **EP 0 687 585 A1**
(43) Date of publication of application: **20.12.1995**
(21) Application number: 94304374.5
(22) Date of filing: 16.06.1994
(51) Int. Cl.: B60J 7/06

(54) **Container with load-sheeting mechanism**

(71) Applicant: Weston, Eric Reginald, Bridgnorth, Shropshire (GB)
(72) Inventor: Weston, Eric Reginald, Bridgnorth, Shropshire (GB)
(74) Representative: Spall, Christopher John

(57) **Abstract**

It is often necessary or desirable to cover a load which has been placed in a container which is open-topped and has two end walls and two side walls. Previous methods of covering such a load, usually by a person working alone with a tarpaulin are time-consuming and possibly dangerous. We provide such a container (1) with a motor-driven roll (16) of sheet material (9), the leading edge of said sheet material (9) being moved from one end of the container (1) to the other, and during said travel being raised from a first level above the ground to a higher level above the ground.

## Description

This invention relates to a container with load-sheeting mechanism.

As employed herein, the expression "a container of the type described" is intended to include the following:-
(1) four walls which are hingedly or otherwise interconnected and which stand upright on the ground or on a concrete base or on any other support, whereby an enclosure having length, breadth and height is created; the enclosure could be used for storage of, for example, grain or the material used for "gritting" the roads in frosty/snowy weather, or for sand for the building industry, and so on.
(2) a skip, skips having become widely used at what are often referred to as tips established, for example, on parts of car parks to enable the public to get rid of domestic and gardening waste, the skips being taken away, when full, to a landfill site where all of the waste is tipped out.
(3) the compartment of a truck (of articulated or non-articulated construction) behind the cab, said compartment being for the transport of a load of some kind.
(4) a trailer of the kind which is widely used, for example, in the farming industry; such a trailer may have side walls and end walls which are not very high (say 60 cms) or may be high-sided.

Items (2), (3) and (4) above will usually have a base and two end walls and two side walls of which at least the base and one of said two end walls and both of said side walls are so fixedly interconnected as to form a unitary structure, the other end wall being either made as a two-part door or gate or being movable as a unit relatively to the base and side walls or being fixed.

It is often necessary or desirable to cover a load which has been placed in a container of the type described (as defined above); the purpose of such covering up of the load with a tarpaulin or sheet might be, for example, to deter thieves or to prevent parts of the load being blown by the wind out of the container or to protect the load against rain and/or wind. Existing ways in which loads can be covered up, usually by a person working alone (for example, loads on trucks), are very time-consuming because of the size and heaviness of the cover and because it is often the case that a part of the load protrudes beyond the plane which contains the top edges of the sides and ends of the container and this protrusion makes the sheeting operation more difficult. Moreover, the sheeting operation is not without its dangers because the footing of the person carrying out the operation can easily slip, leading to injury.

According to a first aspect, the present invention consists in a container of the type described (as defined above) which is open-topped and has two end walls and two side walls, a motor-driven roll of sheet material at or in the vicinity of one of said end `walls, and motor-driven means operable to draw the leading edge of said material away from the roll towards and to the other end wall of the container, said leading edge being moved during its travel towards said other end wall from a first level above the ground to a higher level above the ground, whereby any part of a load protruding slightly above the level of the tops of said side walls will be cleared by said leading edge in the course of sheeting the load, characterised in this that said motor driven means comprises, on each side wall, a first carrier which is displaceable along the side walls and which has an elongate arm pivotally connected to the carrier, one end of said arm being attached to the leading edge of said material at the respective side thereof.

In practice, the load would not be expected to protrude more than one metre in a container having a depth of three or four metres, and usually no more than half a metre.

This has the advantage that a container of the type described (as defined above) has a load-sheeting mechanism which will enable the above-mentioned disadvantages to be overcome or which will at least be operable to make the lone worker's job of covering the load easier and/or less time-consuming and/or safer.

The carrier on each side wall may be either on the top or side of each side wall. The elongate arm may be pivotally connected to the carrier at a location between the opposite ends of the arm, one end of said arm being attached to the leading edge of said material at the respective side thereof and the other end of said arm being constrained to move along a path whose height above the ground alters during the course of the `movement of said carrier along its track. This path may either take the form of a guided pathway or merely be the route which the other end of said arm freely describes.

Preferably, the other end of said arm, at each side of the container, is provided with a sliding member or a freely rotatable roller which is adapted to run on the surface of a fixed support which extends along the respective container side wall, the fixed support comprising three portions of which two are at the opposite ends of an intermediate portion and said intermediate portion being at a level which is nearer to the ground than that of either of the other two portions.

The arm may further be provided with engagement means positioned between the pivotal axis of the arm and the roller on said other end of the arm, and deflecting devices positioned above said surface of the fixed support at or in the vicinities of the junctions between the intermediate portion and the other two portions, the arrangement being such that as the carrier moves the arm along the container side in one direction or the other the engagement means on the arm engages the respective deflecting device which ensures that the roller on the end of the arm moves onto the surface of the intermediate portion .

The junctions may consist of members each of which has a surface which makes a right angle with the plane containing the surface of the intermediate portion.

Each of the deflecting devices is preferably arranged for movement in an arc about an axis against the influence of a return spring.

The fixed support may be such that the intermediate portion thereof is connected at its ends to the other two portions by curvilinear connecting pieces, there being also a complementarily shaped fixed wall element spaced apart from the fixed support in such a manner as to provide a guide track into which the roller on the end of the arm will move when the carrier is moved along its track.

Alternatively, the said other end of the arm, at each side of the container is provided with a linkage. The linkage is connected at a first end to the said other end of the arm and at a second end to a further carrier. The further carrier may be mounted on wheels and guided in a track. Alternatively the further carrier may slide along on low friction bearings. In either case, the carrier is adapted to run along a track, the length of which is less than the length along which the first carrier moves. On reaching the end of its track the further carrier is halted. However, the first carrier may continue to move under the influence of the motor-driven means. The relative movement between the pivot point and the second carrier thus created causes movement of the linkage and also thereby causes the arm to pivot, altering the height above the ground of the said other end of the arm.

The motor-driven means may be driven by a prime mover which is of any suitable type and which is reversible.

The prime mover may drive the carrier by way of a chain and sprockets arrangement, by way of a belt/wire and pulleys arrangement, or in any other suitable manner. Moreover, the prime mover may drive the roll of sheet material by gears, by chain and sprockets, by belt/wire and pulleys or in any other suitable manner. Again, the drive train between the prime mover and the roll of sheet material will preferably include means which will ensure that the sheet material will always be under tension during the travel of its leading edge in both of its directions of travel.

When said container is an integral part of an articulated tipper truck, the container preferably has connected thereto not only the hydraulic or other lifting ram for tipping the load out of the container but also the motor-driven roll of sheet material and said motor-driven means.

The present invention further consists in a container of the type described (as defined above) some exemplary embodiments of which will now be more particularly described with reference to the accompanying diagrammatic drawings, in which:-
Figure 1 is a plan view of such a container;
Figure 2 is a side elevational detail, drawn to a much larger scale than Figure 1, of a first embodiment of an arm and its carrier and associated tracks and channels;
Figure 3 is a very diagrammatic representation of a cross-section of a container side wall, in the region of the stationary carrier of Figure 2, showing an applied support for an edge of the sheet material;
Figure 4 is a schematic representation of the winding mechanism, including the prime mover;
Figure 5 shows a further embodiment of an arm and its carrier and associated tracks and channels;
Figure 6 is a cross-section similar to that of Figure 3 of a further support for an edge of the sheet material;
Figure 7 shows a further embodiment of the carrier; and
Figure 8 shows a further embodiment of the pivot plate arrangement shown in Figure 7.

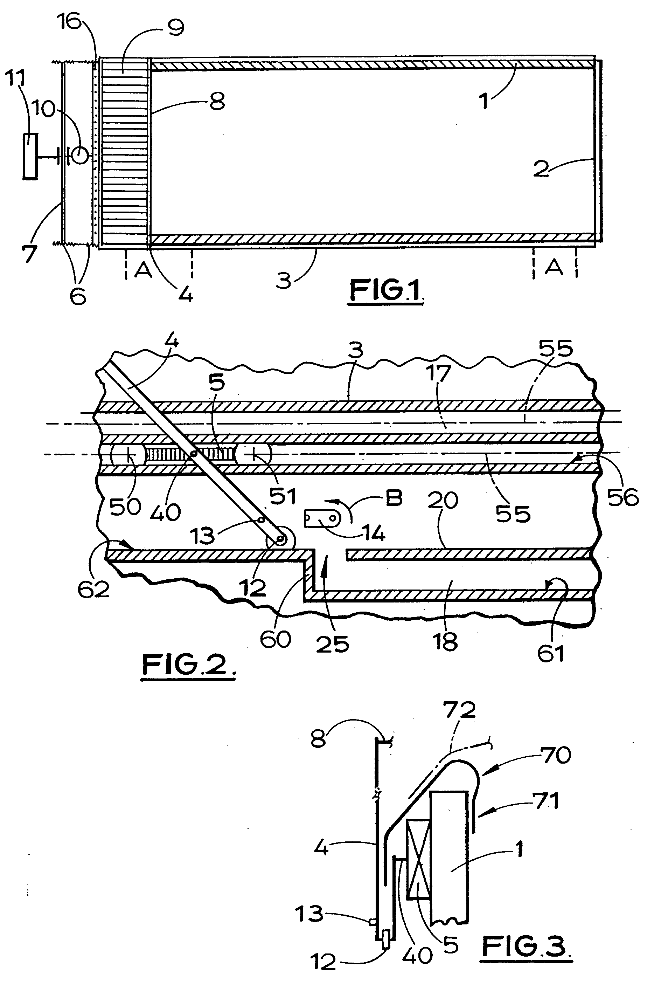

Referring to Figures 1 to 3, channels 3 are attached to the exteriors of both of two side walls of the container 1. The container has, as one end wall, a hinged tail gate 2, in the case of a tipping truck or stationary skip, or it could have said one end wall divided vertically to provide a pair of doors openable about vertical hinge axes. A reversible prime mover 11, mounted at an other end of the container 1, drives a shaft 7.

In the following description, the mechanism on only one side will be referred to for simplicity but, unless specifically stated to the contrary, it is to be understood that such mechanism is provided on both sides of the container.

Said prime mover 11 and shaft 7 (and there is only one of each provided) drive, through sprockets/pulleys 6, a chain/belt/wire in order to move a carrier 5 in either of the two opposite directions, as required, said chain/belt/wire being connected to the opposite ends 50,51 of the carrier 5 and being shown as a broken line 55. A channel 17 is provided for the return lap or part of the chain/belt/wire to travel along. An arm 4 is pivotally connected at 40 to the carrier 5 which is arranged to move in its own track 56.

A single roll 16 of sheet material 9 is mounted at one end of the container 1 and is driven by the prime mover 11 through sprockets/pulleys 6 in order to pay out or to re-reel the sheet material. One end of the arm 4 is connected to the leading edge of the sheet material 9 (see Figure 1).

The other end of the arm 4 carries a roller or guide wheel 12 and, positioned with appropriate spacing from the roller or wheel 12, the arm 4 carries a peg 13 which acts as an engagement means which is adapted to engage a deflecting device 14 as described later. The device 14 is capable of being moved in an arc (indicated by the arrow B) about its axis of rotation against the influence of a return spring (not shown).

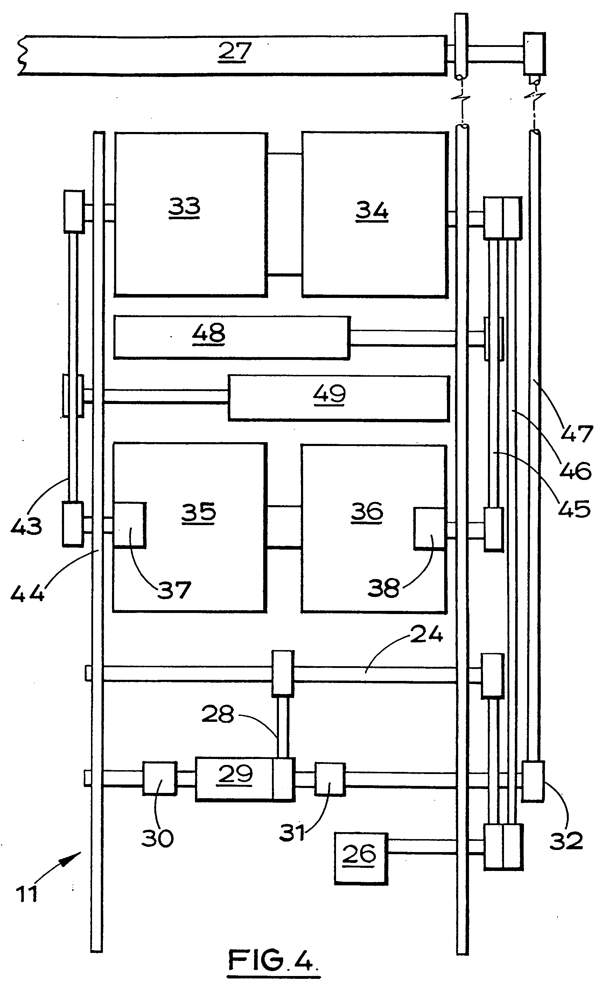

The upper ends of the arms 4 (one on each side of the container) are preferably connected to one another by a rigid member 8 (Figure 3) to which the leading edge of the sheet 9 is connected. The member 8 may take the form of a bar, hollow tube or some other suitable arrangement, for example a taut wire.

Referring further to Figure 3, each of the side walls of the container 1 will preferably have a support member 70 which may be an extrusion of the shape illustrated and which will be securely mounted on the side wall in the region indicated by the reference numeral 71 and which will extend along the complete length of the top of the side wall. The support member 70 is provided for the respective edge portion of the sheet material 9 to slide over and rest upon; said edge portion could, when the load in the container has been sheeted, occupy a position similar to that shown by the interrupted line 72. Without the support member 70, the underside of the sheet material 9 would probably slide over and rest against edges of the channel 3 and would probably become cut or otherwise damaged in time. Use of the support member 70 would mean modifying the arm 4 to the form thereof shown, by way of example, in Figure 3. Lastly, provision of the support member 70 for the above-mentioned purpose will also result in a cover for the underlying mechanism and tracks being provided.

The equivalent of the support member 70, and therefore the attainment of its main purpose, could be provided by an original equipment manufacturer.

A fixed wall element 20 creates a guide track 18 with another wall of the respective channel 3, said track being for a purpose described below.

In operation, and assuming that the sheet material 9 is in its re-reeled condition, the prime mover 11 is started and the carriers 5 with their attached arms 4 are moved from left to right as viewed in the drawing (it being understood that, now that the description of the mechanism is complete or largely so, reference is now going to be made to the constituent parts of the mechanism rather than to the parts which are on only one side of the container). When the pegs on the arms 4 engage the devices 14, said devices move in their respective arcs about their axes to cause the rollers or wheels 12 to move downwardly through gaps 25, continued movement of the carriers 5 and the arms 4 causing the rollers or wheels 12 to enter and move along the guide tracks 18. Such continued movement of the carriers 5 also causes the arms 4 to pivot about their respective axes (in a clockwise direction for the arm 4 shown in Figure 2) and this will, in turn, cause the upper ends of the arms to move upwardly and thus raise the leading edge of the sheet 9 to clear the protruding part of the load.

Of course, when the carriers near the ends of their travels, the rollers or wheels 12 of the arms 4 move out of the guide tracks 18 onto the higher-level supporting surfaces, thereby causing the upper ends of the arms 4 to move downwardly in arcs to complete the sheeting operation.

In Figure 1, there are two regions indicated by dotted lines between which are letters A. This is intended to denote the approximate positions of the two arrangements which enable movement of each of the carriers 5 (one on each side of the container) to be converted into the lifting and the lowering of the leading edge of the sheet 9, the left-hand region A in Figure 1 being substantially as shown in Figure 2 and the right-hand region A in Figure 1 being substantially a mirror image of the Figure 2 arrangement. Obviously, both side walls of the container 1 are provided with complementary arrangements.

When the container 1 forms part of a self-propelled vehicle such as a tipping truck (articulated or otherwise), the prime move 11 and the shaft 7 are positioned so as not to interfere in any way with the hydraulically operated lifting ram 10. If the vehicle is an articulated tipping truck whose cab unit is detachable from the trailed part thereof, the prime mover 11 and the shaft 7 and all of the remainder of the drive mechanism will be mounted on the trailer.

A portion 60 (Figure 2) of the channel 3 is so made that its surface makes a right angle with a surface 61, as illustrated; this facilitates the correct movement of the carrier 5 and the arm 4, at each side, in relation to the respective roller 12 during the sheeting operation.

However, it may prove to be feasible (after experiments yet to be made) to omit the devices 14 and the pegs 13 and, instead, to connect the surface 61 to a further surface 62 by a curvilinear surface (not illustrated) and to extend the fixed wall element 20 in a complementary manner so as to ensure that, at each side of the container, the roller or wheel 12 will smoothly move into the guide track 18 with or without needing to be positively deflected into it.

The top or uppermost part of the hinge mechanism (not illustrated) of the tail gate of a tipping truck can often be from 15 to 25 cms above the level of the plane containing the top edges of the side walls of the container 1; this, therefore, needs to be taken into consideration when bringing the leading end of the sheet 9 downwardly at the end of the sheeting movement.

The height to which the leading edge of the sheet 9 will be adjusted in the course of its travel along the length of the container 1 in either direction of movement is determined not only by the distance between the carrier tracks and the guide tracks 18 but also by the length of the arms 4 from their respective pivot axes 40 to their upper ends which are attached to the bar 8 and thus to the sheet 9.

Instead of the channels 3 being additions which are attached to the exterior surfaces of the side walls of the container 1, said channels or their equivalents could be incorporated into the tops of said side walls by an original equipment manufacturer.

The roll 16 may be made as a hollow tube whose wall is apertured by slots which are in alignment with one another axially of the tube and which are spaced apart from one another along the tube. Such a construction will permit the manufacture of one end of the sheet material 9 with a series of spaced closed loops; these loops will be inserted through the slots into the interior of the tube and a rod will then be pushed along the tube in such a way as to extend through each of the loops in order to connect said one end of the sheet material 9 firmly to the roll 16.

The rigid member 8 attached at its ends to the upper ends of the arms 4 may, in a convenient embodiment of the invention, extend through a sleeve (not shown) which is so made out of the sheet material as to create an attached (integral) flap or apron (not shown). The purpose of providing such a flap or apron is to facilitate the anchoring of the leading edge of the sheet 9 to the container end wall when the leading edge has completed its travel along the length of the container; such flap or apron could have spaced ties or loops attached to the free edge thereof which is parallel to the leading edge of the sheet and said ties or loops could be engaged on hooks mounted on the container end wall.

The sheet material 9 may be reinforced transversely or laterally at spaced locations along its length. The reinforcements would preferably be so positioned that, when the sheet material 9 had been re-reeled onto the roll 16, the reinforcements would not be in alignment with one another radially of the reeled-up material but would (in adjacent convolutions of the reeled-up material) be staggered circumferentially. Such an arrangement would limit the diameter of the reeled-up sheet material 9 on the roll 16.

Holes or slots (not shown) or appropriate size, number and positioning will preferably be provided in the various channel portions which have the surfaces 56, 61, 62, and also in the portion 57; these holes or slots are to enable any water, sand, grit or other unwanted material to be discharged instead of accumulating on those ledges. The discharge of such material would, it is thought, be assisted by vibration of the container in any case where the container is moved (a skip or when part of a truck).

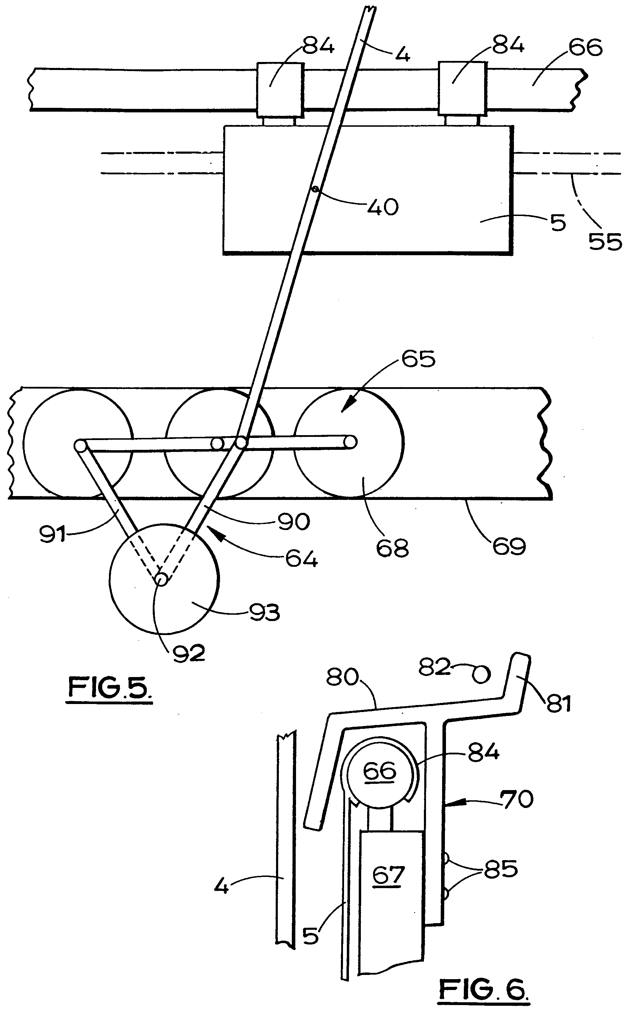

In the embodiment shown in Figures 5 and 6, the motor driven means again comprises a first carrier 5 displaceable along a side wall and has an elongate arm 4 pivotally connected to the carrier 5 at an intermediate point 40 along its length, one end being attached to leading edge of the sheet material 9 and the other end of the arm being constrained by a linkage mechanism 64 to move along a path whose height above the ground alters during the course of movement of the carrier 5.

For ease of understanding, like parts functioning in a like manner have been given like reference numerals.

In this embodiment, the first carrier 5 is hung by supporting elements 84 from a bar 66 running along the top 67 of a side wall and is moved by way of a chain/belt/wire 55 connected at a fixed point to the carrier.

In contrast to the previous embodiment instead of a roller or wheel 12, moving in a guide track, the other end of the arm is connected by way of a linkage 64 to a second carrier 65. While the carrier 65 is shown in the form of a wheeled carriage 68 in a guide track 69 it will be understood that a sliding mechanism provided with low friction surfaces may replace the carriage in the guide track.

In the embodiment shown, the linkage 64 comprises first and second parts 90,91. One end of the first part is pivotally connected to the second carrier 65. One end of the second part is pivotally connected to the other end of the arm 4. The other ends of each of the parts 90,91 of the linkage 64 are pivotally connected to one another at a pivot point 92. This pivot point 92 may be weighted for example by the provision of a roller 93.

The length of the guide track 69 is less than the length along which the first carrier 5 moves. Upon reaching the end of the guide track 69 the second carrier 65 is halted. The relative movement between the pivot point 40 and the second carrier 65 created by further movement of the first carrier 5 causes the arm 4 to pivot, altering the height above the ground of both ends of the arm. The pivoting of the arm 4 is, however, constrained by the action of the linkage 64.

Holes or slots may be provided in the guide track to enable any water, sand, grit or other unwanted material to be discharged as in the previous embodiment.

Turning to the prime mover and winding mechanism shown in schematic form in Figure 4, the power source 26 can be activated by a control switch (not shown). In a truck for example the control switch may conveniently be located in the driver's cab. In a skip or similar enclosure the control switches may be separate from the enclosure itself and may, for example, take the form of a remote control device. This avoids unauthorised access or tampering with the enclosure.

The roll 16 of sheet material 9 is provided on a sheet carrying roller 27. The sheet carrying roller 27 is driven (in both a forwards and reverse direction to enable the sheet material to be paid out and pulled back as appropriate) by the power source 26, via a shaft 24 by means of a power transmission mechanism 28 and an associated differential 29, together with associated first, second and third one-way clutches 30, 31, 32 and through transmissions in mechanism 47. The arrangement of the one-way clutches is a matter of normal engineering expediency and need not be described further.

In this embodiment the same power source can be used to drive the carrier 5 by means of the chain/belt/wire 55 of plastic or other suitable material. Four collector drums 33, 34, 35, 36 wind on and pay out the chain/belt/wire 55. The collector drums 33, 34, 35, 36 are driven by the power source 26 through transmissions in mechanisms 43, 44, 45, 46, which may conveniently comprise the sprockets, pulleys, belts or wires 6. Preferably timing belts are used.

The four collector drums 33, 34, 35, 36 are arranged as two pairs 33, 34 and 35, 36 and allow the chain/belt/wire to be paid out down the left and right hand sides of the container 1 to enable the sheet support arm 8 to be moved. Further one-way clutches 37, 38 are provided to permit suitable tensioning. For example, should the wind get under the sheet material, the one-way clutches maintain the tension in the wires to prevent the sheet material being blown from the container.

Compensators 44, 48 are provided to allow the chain/belt/wire 55 to be wound off and onto the collector drums 33, 34, 35, 36 in a controlled manner.

The prime mover and winding mechanism assembly are mounted at one end of the container. In the case of a truck, the assembly is preferably mounted on the trailer between the cab and the trailer.

Once the sheet material has been paid out to a covering position, a rope or similar running down the length of the container on each side is anchored at one end, tensioned at another end by conventional means and suitably anchored.

The sheet material may alternatively be provided with sides containing wire or other suitable means. When the sheet rests on support member 70, a shown at 72, the wire may be tightened along the length of the container and to be anchored at the front and/or rear of the container, and/or at the sides of the container by conventional means.

To facilitate the movement of the sheet material as it is paid out and pulled back, and the securing of the sheet material once paid out, a sloping surface preferably runs the length of each side of the container. The sloping surface may conveniently be provided by the support member 70.

The moulding illustrated in Figure 6 shows a number of features desirable in such a support member 70.

The support member 70 is supported on the container wall, and extends over the top of the wall. The support member 70 may be connected to the container wall by any convenient means, such as, for example, spot rivets 85.

The support member 70 has a flange 80 which extends over the carrier means supported on the container wall, but stops short of the arm 4 to allow the sheeting to be drawn over the moulding. The flange 80 may be provided with a depending portion 83 to shield the bar 66 and supporting elements 84. A bead 81 is provided on the moulding. In use, if the sheet material is provided with wires 82 along the edges which may be tensioned, the bead 81 provides an abutment for the wires 82. The flange 80 acts generally to support the edges of the sheet material on the container, for example as shown by broken line 72 in Figure 3.

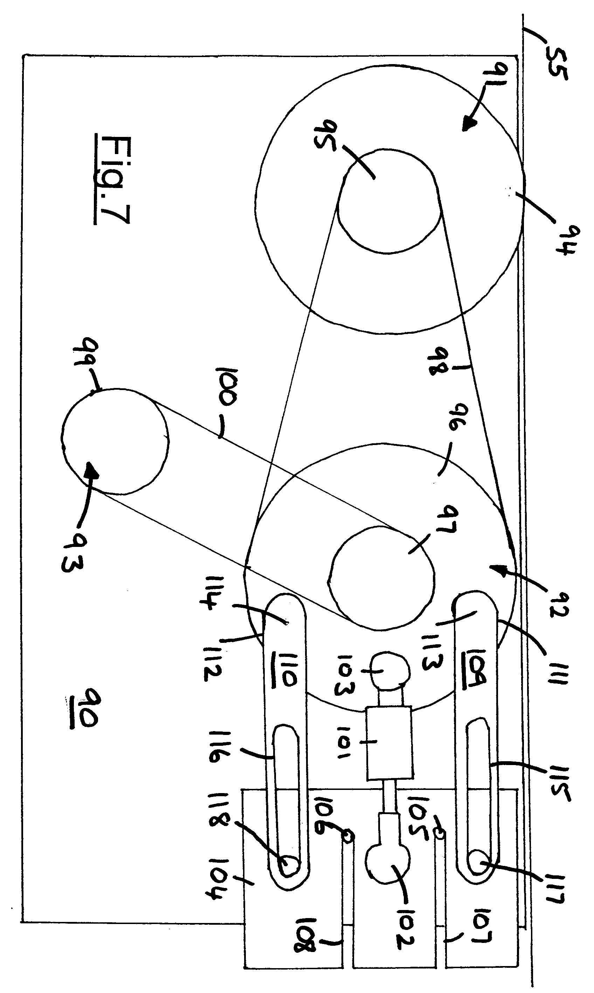

Turning to Figure 7 a further embodiment of the carrier 5 is shown.

The carrier is mounted on a side of a container by runners provided on the top of the carrier running in a track provided on the top of the container and on runners provided on the bottom of the carrier running on a further track provided on the side of the container. The runners may conveniently comprise rollers, sliders or other suitable means.

The carrier comprises a back plate 90, on which are mounted sets of three wheels 91, 92, 93. The first wheel set 91 comprises a pulley 94 and a toothed sprocket 95. The chain/belt/wire 55 is wound around the pulley 94 to locate the pulley on the wire.

The second wheel set 92 comprises a second and a third toothed sprocket 96, 97, mounted on a common axis.

The toothed sprocket 95 on the first wheel set 91 is attached to the second sprocket 96 on the second wheel set 92 by means of a first drive chain 98.

The third wheel set 93 comprises a forth toothed sprocket 99. This forth sprocket 99 is connected to the third toothed sprocket 97 on the second wheel set by means of a second drive chain 100. The forth sprocket 99 is connected to the pivot point of the arm 4 (not shown) causing it to be raised or lowered as appropriate. The other end of the arm is connected to the leading edge of the sheet material.

The second wheel 92 is restricted in its movement by the presence of a gas spring 101. The gas spring 101 is connected at one end to a fixed point 102 on a pivot plate 104 and at the other to a fixed point 103 on the second sprocket 96.

The pivot plate 104 is supported on the backplate 90 by way of two fixed pivot pins 105, 106. The pivot plate 104 may move around the pivot pins 105, 106 due to the presence of slots or recesses 107, 108 in the pivot plate 104.

The movement of the pivot plate 104 is further restricted by rods 109, 110. Each rod 109, 110 is attached at one end 111, 112 to a fixed point 113, 114 on the second sprocket 96. The other end of each rod 109, 110 is provided with a slot 115, 116. The rods are each connected to the pivot plate 104 by way of a pivot pin 117, 118 provided in the slot. In the neutral position shown the pivot pins 117,118 abut the end of the slot in each rod at the end furthest from the second sprocket 96.

This pivot plate arrangement provides a resistance to movement in the second wheel.

End stops (not shown) are provided to halt the carriage at either end of the trackway.

In use, the carrier is held by the wire 55 looped around the pulley 94, and as the wire is paid out and withdrawn by the tensioning means, the carrier is drawn along by the wire.

Upon hitting either end stop, or encountering some other obstacle to its movement, the carrier comes to a halt. The wire 55 however continues moving and this continued movement causes the pulley 94 and hence the first toothed sprocket to turn. The associated first toothed sprocket 95 drives the first drive chain 98 to rotate the second toothed sprocket 96. The movement of the second toothed sprocket 96 drives the associated third toothed sprocket 97 and hence the third wheel 93 which causes the arm 4, to be moved about its pivot point.

As the second sprocket 96, is rotated, the action of the pivot plate arrangement is overcome.

With regard to Figure 7, if the carriage is stopped by an obstacle to its right, the continued movement of the wire 55 rotates the pulley 94 clockwise. The second sprocket is thus also driven clockwise. In such a case, the top rod 109 slides along pivot pin 117. The gas spring 101 which is under compression can then expand causing the pivot plate to pivot about lower pivot pin 106. The plate is also pulled around this point by the slot in the lower rod 110 abutting pivot pin 118, this rod being moved to the left by the action of the second sprocket 96.

Movement of the second sprocket 96 in an anti-clockwise direction will then cause the slotted rod 109 to pull the pivot plate back to pivot about the lover pivot pin 106 until the neutral position shown in the figure is reached. Excessive movement is prevented by the abutment of the pivot pin 118 in the slot 116 of the lower rod 110 abutting the end of the slot.

Further anti-clockwise rotation of the second sprocket, results in the pivot plate pivoting about the upper pivot pin 105.

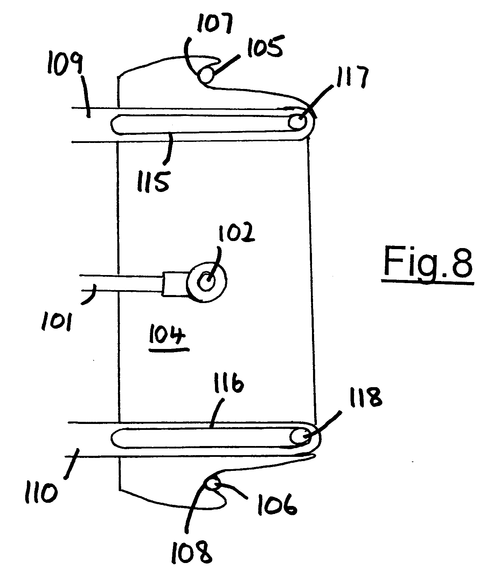

An alternative arrangement for the pivot plate 104 is shown in Figure 8, wherein the pivot pins 105, 106 about which the pivot pins rotate are located on the other side of the slotted rods from the gas spring.

After the carrier has been stopped, a tension detecting means detects the increase in tension in the wire 55. Once a particular predetermined tension has been reached, a cut-out is operated to prevent the burning out of the circuitry or damage to the carrier mechanism. Preferably, such a tension detecting means may comprise an arrangement of limit switches located near the prime mover.

## Claims

1. A container (1) which is open-topped and has two end walls and two side walls, having a motor-driven roll (16) of sheet material (9) at or in the vicinity of one of said end walls, and motor-driven means operable to draw the leading edge of said material away from the roll towards and to the other end wall of the container, said leading edge being moved during its travel towards said other end wall from a first level above the ground to a higher level above the ground, whereby any part of a load protruding slightly above the level of the tops of said side walls will be cleared by said leading edge in the course of sheeting the load, characterised in that said motor driven means comprises, on each side wall, a first carrier (5) which is displaceable along the side walls and which has an elongate arm (4) pivotally connected to the carrier (5), one end of said arm (4) being attached to the leading edge of said material (9) at the respective side thereof.

2. A container according to claim 1, characterised in that the elongate arm is pivotally connected to the first carrier at a location between the opposite ends of the arm, and another end of said arm being connected to a second carrier (12,65), relative movement of the first and second carriers (5,12,65) causing the height of the other end of said arm to alter.

3. A container according to claim 1, characterised in that the elongate arm is pivotally connected to the first carrier at a location between the opposite ends of the arm, and another end of said arm being constrained to move along a path whose height above the ground alters during the course of the movement of said first carrier.

4. A container according to claim 3, in which the second carrier is connected to the other end of the arm by way of a linkage between the other end of the arm and the second carrier.

5. A container according to claim 1, characterised in that the first carrier (5) is adapted to cause the elongate arm (4) to pivot.

6. A container according to claim 5, characterised in that the first carrier comprises a first wheel (91) driven by the motor driven means, a second wheel (92) driven by the first wheel, and a third wheel (93) driven by the second wheel, the third wheel being connected to the elongate arm to cause it to pivot.

7. A container according to any preceding claim, in which the carrier or carriers is or are displaceable along a track provided on the side wall.

8. A container according to claim 7, in which the track for the second carrier is such that an intermediate portion thereof is connected at its ends to the other two portions by curvilinear connecting pieces, there being also a complementarily shaped fixed wall element spaced apart from the track for the second carrier in such a manner as to provide a guide into which the second carrier on the end of the arm will move when the first carrier is moved along its track.

9. A container according to any preceding claim, in which the motor driven means is a reversible prime mover and the drive train between the prime mover (11) and the roll (16) of sheet material (9) includes means to ensure that the sheet material will always be under tension during the travel of its leading edge in both of its directions of travel.

10. A container according to any preceding claim, in which when said container (1) is an integral part of an articulated tipper truck, the container preferably has connected thereto not only the hydraulic or other lifting ram for tipping the load out of the container but also the motor-driven roll of sheet material and said motor-driven means.
